# EUROPEAN PATENT APPLICATION

(11) **EP 2 898 782 A1**
(43) Date of publication of application: **29.07.2015**
(21) Application number: 14152918.0
(22) Date of filing: 28.01.2014
(51) Int. Cl.: A23L 1/304, C02F 1/42, C02F 1/68

(54) **Method and apparatus for conditioning an aqueous liquid and use of such liquid**

(71) Applicant: Brita GmbH, 65232 Taunusstein (DE)
(72) Inventor: Felber, Stefanie, 61250 Usingen (DE); Dobbelfeld, Andrea, 65326 Aarbergen (DE)
(74) Representative: Meissner, Bolte & Partner GbR

(57) **Abstract**

An apparatus for conditioning an aqueous liquid, e.g. drinking water, includes a first liquid treatment section (3;23) including a liquid treatment medium for reducing at least the carbonate hardness of water brought into contact with the medium. The apparatus includes a second liquid treatment section (4;24), separate from the first liquid treatment section (3;23) and including a liquid treatment medium for releasing potassium into water brought into contact with the medium. The apparatus is configured to provide the treated water with a potassium concentration of at least 30 mg·l⁻¹.

## Description

The invention relates to an apparatus for conditioning an aqueous liquid, e.g. drinking water,
wherein the apparatus includes a first liquid treatment section including a liquid treatment medium for reducing at least the carbonate hardness of water brought into contact with the medium, and
wherein the apparatus includes a second liquid treatment section, separate from the first liquid treatment section and including a liquid treatment medium for releasing potassium into water brought into contact with the medium.

The invention also relates to a liquid treatment cartridge for use in such an apparatus.

The invention also relates to a method of conditioning an aqueous liquid, e.g. drinking water,
wherein at least a portion of the liquid is led through a first liquid treatment section including a liquid treatment medium for reducing at least the carbonate hardness of the liquid, and
wherein at least a portion of the liquid is led through a second liquid treatment section, separate from the first liquid treatment section and including a liquid treatment medium for releasing potassium into the liquid.

The invention also relates to a use of drinking water.

WO 2012/146567 A1 discloses a suction filter cartridge including an outer housing within which are arranged a first chamber, second chamber and third chamber. In use, water enters the suction filter cartridge through an annular inlet channel. From there, it passes into the first chamber. The first chamber can house any one or more of a number of media for treating water including mechanical filter material, such as pleated membranes, ion exchange material, antimicrobial filter material and the like. From the first chamber, the water passes into a connecting chamber, where it is separated into two streams. A first fraction of the water to be treated proceeds into the second chamber, whereas a second fraction of the water to be treated proceeds into the third chamber. The streams are reunited upon treatment when they reach an outlet of the suction filter cartridge. The second and third chambers are separated by a partition wall. Strict separation is not required. In use, the second chamber is filled with a medium for treating water, which medium includes a mixture of an amount of cation exchange material in the hydrogen form and an amount of (the same) cation exchange material loaded with a first counter ion species. The cation exchange material can be organic or inorganic, but will generally be a weakly acidic cation exchange resin. The first counter ion species can be potassium, sodium or magnesium, for example. Similarly, the third chamber is filled with a medium for treating water, which includes a mixture of an amount of cation exchange material in the hydrogen form and an amount of (the same) cation exchange material loaded with a second counter ion species (i.e. different from the first counter ion species). Again, the cation exchange material can be organic or inorganic, but will generally be a weakly acidic cation exchange resin. The second counter ion species can be a different one of the three counter ion species mentioned above as examples.

The known filter cartridge can be used to provide water with a particular mineral composition relatively consistently. A problem left unaddressed is to adapt the composition of the water to provide better results in subsequent processes for preparing a beverage such as coffee.

It is an object of the invention to provide an apparatus, cartridge, method and use of the types defined above in the opening paragraphs that are suitable for providing water suited particularly to use in brewing coffee.

This object is achieved according to a first aspect with the apparatus according to the invention, which is characterised in that the apparatus is configured to provide the treated water with a potassium concentration of at least 30 mg·l⁻¹.

It has been found that a potassium concentration above this level has an effect on the extraction of those soluble components that lend coffee a roasted aroma. The aroma is more noticeable compared to coffee brewed using water having only a reduced carbonate hardness when the concentration is at least 60 mg·l⁻¹. The concentration may in particular be at least 100 mg·l⁻¹, or even 200 mg·l⁻¹ or more, to provide a really strong effect. Within the range of 30 - 60 mg·l⁻¹, the effect is the opposite. Thus, the invention can be used to adapt the taste of coffee or similar beverages to local preferences.

It is observed that water treatment cartridges are known which include a single interior chamber separated by a permeable barrier to define two interior sections. A flow of water to be treated is split into two sub-flows. A fall tube is provided to lead a first of the sub-flows through both sections consecutively and a second of the sub-flows through only a downstream section of the two sections so as to bypass the other section. The two sub-flows are reunited in the downstream section. The downstream section is filled with only activated carbon. The upstream section is filled with weakly acidic cation exchange resin of which a fraction is loaded with potassium and the majority is loaded with hydrogen. The cation exchange resin loaded with potassium is provided to ensure that the treated water led through the cartridge at an initial stage in its lifetime does not become too acidic. However, because the two types of cation exchange resin are mixed in one section and are not separated from one another, the effect is to release a relatively large amount of potassium initially and then almost none at all, so that the known cartridge cannot be used to set a defined potassium concentration consistently.

In an embodiment, the apparatus is configured to provide the treated water with a potassium concentration of at most 300 mg·l⁻¹.

It has been determined that drinking water with a potassium concentration above this limit, when used to brew coffee, results in the extraction of components that confer a taste reminiscent of burnt foodstuffs on the coffee. The taste is strong enough to make the coffee less palatable to the average consumer.

In an embodiment, the liquid treatment medium for releasing potassium into water includes a cation exchange material loaded with potassium.

The cation exchange material loaded with potassium has the further effect of reducing the total hardness of the water and of removing heavy metals. It can thus be used to condition water to meet the specifications recommended by trade bodies. Furthermore, compared to enrichment by dissolving mineral compositions, this embodiment can operate without a dosing device, and the total mineral content (Total Dissolved Solids value) does not increase as a consequence of the treatment.

In a variant of this embodiment, a majority of the cation exchange material included in the liquid treatment medium of the second liquid treatment section is in the potassium form.

Mixtures of cation exchange material loaded with different counter ions are generally less effective at carrying out a particular kind of treatment. For example, water treated by a mixture of cation exchange material in the hydrogen form and cation exchange material in the potassium form will tend to contain a high amount of potassium until the cation exchange material loaded with potassium has been exhausted. Only then will hydrogen start to be released to an appreciable extent. On the other hand, there will be only a limited or no release of potassium at that stage. Thus, it is more effective to include in the second treatment section only cation exchange material loaded with potassium, at least initially. This is achieved by providing a majority, measured by volume, e.g. dry volume, of the cation exchange material in the hydrogen form.

In an embodiment of the apparatus, the liquid treatment medium for reducing at least the carbonate hardness includes a cation exchange material loaded with hydrogen.

The hydrogen is exchanged for magnesium and calcium and reacts with hydrogen carbonate to form CO₂. Thus, the mineral content of the liquid is decreased and the carbonate hardness, also known as temporary hardness, is reduced. In addition, heavy metals are removed. This is achieved merely by contacting the liquid with the liquid treatment medium.

In a variant of this embodiment, a majority of the cation exchange material included in the liquid treatment medium of the first liquid treatment section is in the hydrogen form.

Of all the cation exchange material included in the first liquid treatment section, the majority, measured by volume, e.g. dry volume, is in the hydrogen form, at least initially. This again improves the effectiveness and consistency of the treatment, in this case in the first liquid treatment section.

In an embodiment, the liquid treatment medium of at least one, for example both, of the first and second liquid treatment sections includes a weakly acidic cation exchange resin.

Compared to strongly acidic cation exchange resin, weakly acidic cation exchange resin has a higher volumetric capacity (in terms of the number of functional groups per unit volume as measured in accordance with e.g. DIN 54403). Thus, the liquid treatment sections can be relatively compact. This is especially of use where they are included in replaceable liquid treatment cartridges.

In an embodiment, the apparatus is a throughflow apparatus, having at least one inlet for connection to a source of untreated liquid and at least one outlet for supplying the conditioned liquid, and at least the first and second liquid treatment sections are configured to treat liquid flowing through the liquid treatment medium whilst retaining the liquid treatment medium.

The apparatus can thus be simpler than one arranged to implement a batch treatment process. In particular, the at least one inlet may be for connection to a source of mains water, and the at least one outlet may be for connection to a conduit connecting the apparatus to an appliance arranged to process the conditioned water, with the pressure of the mains water being sufficient to operate the apparatus. Thus, pumps can be dispensed with. The appliance could be a vending machine or high-yield espresso machine for use in coffee bars and restaurants, for example.

In a variant, the apparatus is arranged to split an incoming flow of liquid into at least two sub-flows, to lead a first of the sub-flows through only one of the first and second liquid treatment sections, to lead a second of the sub-flows through at least the other of the first and second liquid treatment sections, and to reunite the first and second sub-flows upstream of the at least one outlet.

Thus, at least one of the sub-flows bypasses at least one of the liquid treatment sections. In a particular variant, each of the sub-flows is led through only one of the first and second treatment sections, so that they are truly parallel in flow sense. This helps ensure that the treatment in one of the first and second liquid treatment sections is not reversed in the other. In particular, it is prevented that potassium added in the second liquid treatment section is removed with the components contributing to carbonate hardness in the first liquid treatment section, for example in exchange for hydrogen. Moreover, where the second liquid treatment section includes a cation exchange material loaded with potassium, it is ensured that the liquid led through the second liquid treatment section has a high enough concentration of counter ions for exchange against the potassium.

In a variant, the apparatus is arranged to split the incoming flow of liquid into at least three sub-flows, to lead a third of the sub-flows through a third liquid treatment section, and to reunite the first, second and third sub-flows upstream of the at least one outlet.

This embodiment allows the apparatus to be adapted to treatment of liquid within a relatively wide range of compositions, e.g. water with a high degree of overall hardness but relatively low carbonate hardness or vice versa. The liquid treatment medium in the third liquid treatment section may be the same as in the first liquid treatment section or it may be the same as in the second liquid treatment section, depending on the properties of the liquid to be treated. One can thus avoid having to use a variable-ratio flow divider to set the volumetric flow rate ratio between the first and second sub-flows. Rather, the volumetric flow rate ratios between the first, second and third sub-flows can be essentially fixed, with more of the liquid to be treated subjected to potassium enrichment or reduction of carbonate hardness depending on the properties of the liquid to be treated. In addition to the potassium concentration set as a target as outlined herein, there are further specifications recommended by coffee trade associations. For example, the German Coffee Association (Deutscher Kaffeeverband) has issued the following recommendations (in terms of mineral composition) :

| | |
|---|---|
| Total mineral contents: | 100 - 200 mg·l⁻¹; |
| Total hardness: | 4 - 8 °dH; |
| Carbonate hardness: | 3 - 6 °dH; |
| Iron: | < 0.5 mg·l⁻¹; and |
| Copper: | < 0.5 mg·l⁻¹. |

The requirement in terms of total mineral content translates into a requirement in terms of electrical conductivity, which is relatively easily measurable, of 200 - 400 µS·cm⁻¹.

It may be that the recommended specifications for the conditioned liquid cannot be met only by eliminating the carbonate hardness of some of the liquid and adding potassium in exchange for other cations to the rest of the liquid. In that case, a third type of treatment can be implemented in the third liquid treatment section. An example would be complete deminer-alisation by a mixture of strongly acidic cation exchange resin and strongly basic anion exchange resin. Assume, for example, that the liquid treatment medium in the first liquid treatment section includes or indeed essentially consists of a weakly acidic cation exchange resin in the hydrogen form and the liquid treatment medium in the second liquid treatment section includes or essentially consists of a weakly acidic cation exchange resin in the potassium form. Liquid treated in the first liquid treatment section would have its carbonate hardness reduced and the total hardness by the same amount (total hardness being the sum of permanent hardness and carbonate hardness). In addition, the total mineral content would be reduced commensurate with the reduction in carbonate hardness. The liquid treated in the second liquid treatment section would have its total hardness reduced. It might appear that the carbonate hardness is thereby also reduced proportionally. However, the hydrogen carbonate ions are not removed. What is termed the acid neutralising capacity (pH = 4.3), that is the quantitative capacity of an aqueous solution to neutralise an acid, is not reduced. Because hydrogen carbonate ions remain in the liquid treated in the second liquid treatment section, the carbonate hardness rises again when the two sub-flows are re-united, to the extent that the first sub-flow still contains magnesium and calcium ions. If one wishes to provide a certain potassium concentration and reduce the carbonate hardness sufficiently, it may be necessary to demineralise the third sub-flow. This may also be the case where the untreated liquid has a relatively high mineral content (high electrical conductivity) but the carbonate hardness is not especially high or the potassium content is especially low. In that case, the liquid treatment medium in the third liquid treatment section should be for essentially demineralising the liquid of the third sub-flow.

It follows from the above that, in a particular variant, the third liquid treatment section includes a liquid treatment medium for the treatment of liquid by ion exchange.

Compared to e.g. the use of ultra- or nanofiltration or the use of electrophysical treatment devices, this variant is relatively simple.

In a particular variant, the third liquid treatment section includes a liquid treatment medium for demineralising water brought into contact with the liquid treatment medium.

This variant is thus, for example, of use where the untreated liquid has a relatively high mineral content but a low carbonate hardness.

In an embodiment of the apparatus, the apparatus includes a housing, the housing being provided with at least one inlet port and at least one outlet port, and at least the first and second liquid treatment sections are contained within the housing.

This variant provides a relatively compact apparatus with few, if any, relatively short conduits between vessels forming liquid treatment sections.

In an embodiment, at least the first and second liquid treatment sections are contained within a replaceable liquid treatment cartridge for releasable connection to a cartridge head including the at least one inlet and the at least one outlet.

The liquid treatment media in the first and second liquid treatment sections can have a limited treatment capacity and be regenerated off-site. Furthermore, the apparatus can be adapted to local circumstances by using an appropriate one of several different compatible cartridges. Because the first and second liquid treatment sections are arranged within the same cartridge, the apparatus can be implemented using a cartridge head for connection to a single replaceable cartridge. There are many such cartridge heads already in use in coffee bars and restaurants, so that existing equipment can be adapted to provide conditioned liquid with the properties specified herein.

In an embodiment, wherein the apparatus includes a housing, the housing being provided with at least one inlet port and at least one outlet port, and wherein at least the first and second liquid treatment sections are contained within the housing, the housing defines a chamber extending in axial direction with respect to a principal axis of the chamber, and the first and second liquid treatment sections are delimited by at least one wall partitioning at least an axial section of the chamber into sections arranged in parallel in flow sense.

This embodiment provides a relatively compact apparatus and requires relatively few and relatively short conduits between vessels containing liquid treatment media. Where the housing is that of a replaceable liquid treatment cartridge, this embodiment allows one to adapt existing liquid treatment cartridges without having to change the housing design. Instead of having one chamber or section of a chamber filled with a liquid treatment medium (which may be a mixture) of essentially uniform composition, the chamber is partitioned by adding the at least one partitioning wall to define at least the first and second treatment sections. This can be done both in liquid treatment cartridges which have their at least one inlet at one end of a principal axis and their at least one outlet at the opposite end and with liquid treatment cartridges which have the inlets and outlets at the same end and make use of a riser or fall tube to transport the liquid past the liquid treatment medium. In the latter case, the at least one partitioning wall would extend radially with respect to the longitudinal axis from the tube to the chamber wall.

In an embodiment of the apparatus, wherein the apparatus is arranged to split the incoming flow of liquid into at least three sub-flows, to lead a third of the sub-flows through a third liquid treatment section, and to reunite the first, second and third sub-flows upstream of the at least one outlet, and wherein the housing defines a chamber extending in axial direction with respect to a principal axis of the chamber and the first and second liquid treatment sections are delimited by at least one wall partitioning at least an axial section of the chamber into sections arranged in parallel in flow sense, the third liquid treatment section is arranged within the chamber and separated from that of the first and second liquid treatment sections by at least one wall partitioning at least the axial section of the chamber into sections arranged in parallel in flow sense.

Thus, it is ensured that each of the first to third sub-flows passes essentially through only a respective one of the first to third liquid treatment sections, so that at least one can effect a treatment different from the other two. Through the use of partitioning walls, variants of the apparatus with only a first and second liquid treatment section and such also having a third liquid treatment section can be implemented using many common parts. Essentially, it suffices to provide a different arrangement of partitioning walls. Furthermore, adjustable valves or the like need not be provided within the cartridge in order to set a particular volumetric flow rate ratio between the sub-flows undergoing one type of treatment and those undergoing a different type of treatment. Indeed, the cartridge need not even be provided with separate inlets for these sub-flows, which can be created simply by introducing the liquid to be treated at one axial end of the chamber. The relative cross-sectional areas of the partitioned sections and the types of medium contained therein automatically determine the ratio. Thus, even with one configuration of partitioning walls, a cartridge suitable to a particular composition of untreated liquid can be provided by filling the sections created by the partitioning walls with the appropriate media.

In an embodiment, wherein the apparatus is arranged to split an incoming flow of liquid into at least two sub-flows,
to lead a first of the sub-flows through only one of the first and second liquid treatment sections,
to lead a second of the sub-flows through at least the other of the first and second liquid treatment sections, and
to reunite the first and second sub-flows upstream of the at least one outlet, the apparatus is configured to split the incoming flow of liquid such as to create at least a further sub-flow bypassing each of the first, second and third liquid treatment sections.

The media in the first, second and, insofar as present, third liquid treatment section will generally have a limited treatment capacity. This is in particular the case for ion exchange materials. Although it would generally be possible to provide conditioned liquid meeting the specifications for brewing coffee by passing all of the liquid through at least one liquid treatment section including such a liquid treatment medium and by mixing the differently treated fractions of this liquid in the appropriate proportions, this would be a relatively inefficient way of using the liquid treatment media. The bypass sub-flow need not be treated at all by such media. Alternatively, it can be treated by a less expensive treatment medium not particularly arranged to affect the mineral composition of the liquid contacting it.

Thus, a variant of this embodiment includes a further liquid treatment section through which the bypass sub-flow is led, wherein the treatment in the further liquid treatment section is of a type other than treatment by contacting with an ion exchange material.

The treatment in the further liquid treatment section may comprise purely mechanical filtration to meet the recommended specifications for drinking water for brewing coffee in terms of its appearance (clarity and the like). It may comprise treatment by a medium for the treatment of water by sorption, in particular activated carbon. This ensures that recommended specifications for the free chlorine content and/or organic contaminant content are met. The medium may also include a medium for the removal of at least one species of heavy metal, e.g. lead.

In an embodiment, wherein the apparatus includes a housing, the housing being provided with at least one inlet port and at least one outlet port, and wherein at least the first and second liquid treatment sections are contained within the housing, wherein the apparatus includes a further liquid treatment section through which the bypass sub-flow is led, and wherein the treatment in the further liquid treatment section is of a type other than treatment by contacting with an ion exchange material, the further liquid treatment section is contained within the housing.

This obviates the use of a separate liquid treatment device for treating the bypass sub-flow. In an apparatus based on the use of replaceable liquid treatment cartridges, a separate liquid treatment device would generally also imply the use of a cartridge head or manifold for connection of at least two replaceable liquid treatment cartridges. Such apparatus have a relatively large footprint, which is often inconvenient in a restaurant, espresso bar or café setting. Moreover, this embodiment allows the third liquid treatment section to be used for also treating the first and second sub-flows, e.g. by subjecting them to mechanical filtration to ensure that any particles of treatment medium from the first and second liquid treatment sections are removed.

In an embodiment, wherein at least the first and second liquid treatment sections are contained within a replaceable liquid treatment cartridge for releasable connection to a cartridge head including the at least one inlet and the at least one outlet, and wherein the apparatus is configured to split the incoming flow of liquid such as to create at least a further sub-flow bypassing each of the first, second and third liquid treatment sections, the liquid treatment cartridge is provided with at least two inlets for liquid-tight connection with respective outlets of the cartridge head upon connection of the liquid treatment cartridge to the cartridge head, and the cartridge head includes a variable-ratio flow divider for setting the volumetric flow rate ratio between the bypass sub-flow and the sum of the other sub-flows.

Thus, it can be determined in the cartridge head how much of the liquid to be treated is passed through the liquid treatment sections containing relatively expensive liquid treatment media with specific functions and how much is not treated at all or only in a manner not appreciably affecting the mineral composition. The liquid treatment cartridge need not be provided with the relatively expensive variable-ratio flow divider. The cartridge can thus be for single use only. Moreover, account is taken of the fact that the cartridge, at least once installed, is often not as accessible as the cartridge head. Adjustment of the variable-ratio flow divider, which may be manual or automated, is therefore facilitated. This embodiment can be implemented using the cartridge heads and cartridge housing configuration found in existing liquid treatment apparatus for partially decarbonising water (i.e. lowering the carbonate hardness). Such existing apparatus already provides for the splitting of the flow of untreated liquid into a sub-flow for treatment by a liquid treatment medium comprising mainly weakly acidic cation exchange resin in the hydrogen form and a bypass sub-flow that is treated only by activated carbon contained in a section of the liquid treatment cartridge or that bypasses the liquid treatment cartridge altogether.

In a particular variant of this embodiment, the division into at least the first and second sub-flows occurs in the liquid treatment cartridge.

An effect is not to have to provide an interface between the replaceable liquid treatment cartridge and the cartridge head across which more than two sub-flows of untreated liquid have to be transported. Again, this allows the apparatus to be implemented using existing cartridge heads and cartridge housing configurations. The complexity and expense of the cartridge head and cartridge are kept within acceptable bounds.

In a variant, the liquid treatment cartridge is provided with an outlet for liquid-tight connection with an inlet of the cartridge head upon connection of the liquid treatment cartridge to the cartridge head, and the sub-flows are reunited within the liquid treatment cartridge.

An effect is that the liquid treatment cartridge need have only one outlet and the cartridge head need have only one corresponding inlet. This means that fewer connections across the interface between the two need be sealed. Moreover, it is possible to make use of existing cartridge heads, which are configured for use with cartridges having two inlets and one outlet. Finally, it is possible to provide a further treatment common to all the sub-flows within the liquid treatment cartridge at the location where the sub-flows are reunited or downstream thereof. This could be of use where the further treatment includes treatment by activated carbon. Any undesirable taste imparted on the liquid by the media (in particular ion exchange resins) in the first and second liquid treatment sections can be removed again.

In a particular variant therefore, the sub-flows are reunited in the further liquid treatment section.

Thus, efficient use is made of liquid treatment media or devices within the liquid treatment cartridge. Those types of treatment common to all sub-flows are carried out in the further liquid treatment section. Those specific to a certain one or certain sub-set of the sub-flows are carried out in dedicated liquid treatment sections through which only that or those sub-flows are conducted. Because the sub-flows are reunited in the liquid treatment section, the liquid treatment cartridge can be more compact than if they were to be reunited upstream of the further liquid treatment section and conducted to it through a separate conduit in which no treatment takes place.

An embodiment of the apparatus further includes an apparatus for producing a beverage, e.g. coffee, by extraction, the beverage production apparatus being arranged to be provided with the conditioned liquid.

The liquid-conditioning process influences the outcome of the extraction process. The apparatus is configured to produce a beverage of which the strength of the roasted aroma is adapted to local tastes.

According to another aspect of the invention, there is provided a liquid treatment cartridge for use in an apparatus according to the invention including at least the first and second liquid treatment sections.

According to another aspect, the method according to the invention is characterised by providing the conditioned liquid with a potassium concentration of at least 30 mg·l⁻¹.

The conditioned liquid is suitable for affecting the taste of coffee brewed using it. The roasted aroma is more noticeable compared to coffee brewed using water having only a reduced carbonate hardness when the concentration is at least 60 mg·l⁻¹. The concentration may in particular be at least 100 mg·l⁻¹, or even 200 mg·l⁻¹ or more, to provide a really strong effect. Within the range of 30 - 60 mg·l⁻¹, the effect is the opposite.

In an embodiment, the method includes providing the conditioned liquid with a potassium concentration of at most 300 mg·l⁻¹.

In an embodiment, at least the first and second liquid treatment sections are contained within a housing of a replaceable liquid treatment cartridge for connection to a cartridge head by means of a mechanical interface, the mechanical interface being arranged to establish essentially liquid-tight connections between at least one inlet port of the liquid treatment cartridge and between at least one outlet port of the liquid treatment cartridge and respective inlet ports of the cartridge head upon connection of the replaceable liquid treatment cartridge to the cartridge head.

The liquid treatment media can thus be exchanged relatively easily when exhausted. Regeneration on site is not required, making this embodiment suitable for use in a restaurant, café or coffee bar.

In an embodiment, wherein the liquid treatment cartridge is provided with at least two inlet ports for liquid-tight connection to respective outlet ports of the cartridge head upon connection of the liquid treatment cartridge to the cartridge head, and wherein the first and second liquid treatment sections are in fluid communication with a first of the at least two inlet ports and a flow of liquid entering the liquid treatment cartridge through a second of the inlet ports is led through the cartridge so as to bypass the first and second liquid treatment sections, the method includes adjusting a volumetric flow rate ratio between flows of liquid led through the first and second inlet ports.

Thus, the liquid treatment cartridge need not necessarily be provided with a device for adjusting the volumetric flow rate ratio, making it simpler and cheaper to manufacture.

An embodiment of the method according to the invention includes the use of an apparatus according to the invention.

According to another aspect, the invention provides for the use of drinking water having a potassium concentration of at least 30 mg·l⁻¹ and/or obtained by means of a method according to the invention to produce a beverage by extraction, for example coffee.

The concentration may be at least 60 mg·l⁻¹. The concentration may in particular be at least 100 mg·l⁻¹, or even 200 mg·l⁻¹ or more. It may be less than 300 mg·l⁻¹. The carbonate hardness of the drinking water may be below 6° dH.

The invention will be described in further detail with reference to the accompanying drawings, in which:
Fig. 1 is a schematic diagram for illustrating the operation of an apparatus for conditioning an aqueous liquid such as drinking water;
Fig. 2 is a schematic diagram of an apparatus for conditioning an aqueous liquid including a cartridge head and a replaceable liquid treatment cartridge with three parallel liquid treatment sections;
Fig. 3 is a cross-sectional view transverse to a principal axis of the liquid treatment cartridge of Fig. 2;
Fig. 4 is a cross-sectional perspective view of a prototype liquid treatment cartridge with two parallel liquid treatment sections;
Fig. 5 is a perspective view showing inlet ports of the cartridge of Fig. 4;
Fig. 6 is a perspective view showing an outlet port of the cartridge of Figs. 4 and 5;
Fig. 7 is a detailed cross-sectional view showing a liquid-permeable device at an outlet end of parallel liquid treatment sections arranged within the cartridge of Figs. 4-6;
Fig. 8 is a detailed cross-sectional view showing a liquid distribution device contained within the cartridge of Figs. 4-7;
Fig. 9 is a perspective view of an insert for forming a liquid treatment section within the cartridge of Figs. 4-8; and Fig. 10 is a bottom view of the insert shown in Fig. 9.

An apparatus for conditioning an aqueous liquid includes an inlet 1 for receiving a flow of liquid to be treated, in particular drinking water, e.g. drinking water from the water mains. The inlet 1 is connected to a variable-ratio flow divider 2. The incoming flow of liquid is split into a first flow of liquid and a bypass flow of liquid in the variable-ratio flow divider 2. The volumetric flow rate ratio between the first and bypass flow of liquid is set by the variable-ratio flow divider 2 and is adjustable.

The first flow of liquid is distributed over a first liquid treatment section 3, second liquid treatment section 4 and third liquid treatment section 5. Each of the first, second and third liquid treatment sections 3-5 contains a liquid treatment medium including at least one ion exchange material. In effect, the first flow of liquid is split into three sub-flows, each led through a respective one of the first, second and third liquid treatment sections 3-5.

The volumetric flow rate ratio between the sub-flows is fixed by the layout of the apparatus. The first, second and third liquid treatment sections 3-5 are separated from each other and arranged in parallel in flow sense. Thus, they comprise separated compartments within a single container or they comprise separate containers. The liquid pressure at inlet ends of the liquid treatment sections 3-5 is essentially the same, as is the liquid pressure at their outlet ends.

In a particular embodiment, the liquid treatment sections contain liquid treatment media of different composition. In another embodiment, the composition of the liquid treatment medium in two of the liquid treatment sections 3-5 is essentially the same.

At least one, e.g. the first liquid treatment section 3, contains a liquid treatment medium for the reduction of carbonate hardness. In this embodiment, the liquid treatment medium comprises a weakly acidic cation exchange resin in the hydrogen form. The majority, e.g. essentially all of the cation exchange material in the first liquid treatment section 3 is at least initially in the hydrogen form. The hydrogen is exchanged for cations in the liquid of the sub-flow passing through the first liquid treatment section 3. The hydrogen reacts with hydrogen carbonate anions to form CO₂.

The second liquid treatment section 4 includes a liquid treatment medium for releasing potassium into water brought into contact with the medium. The second liquid treatment section 4 also provides the effect of reducing total hardness, which is the sum of permanent hardness and carbonate hardness. Carbonate hardness is caused by dissolved magnesium and calcium carbonate in the liquid. Permanent hardness is caused by other calcium and magnesium salts, including in particular calcium and magnesium sulphate. In the illustrated embodiment, the medium in the second liquid treatment section 4 comprises a weakly acidic cation exchange resin in the potassium form. The majority of the cation exchange material in the second liquid treatment section 4 is at least initially in the potassium form. This liquid treatment medium releases potassium in exchange for calcium and magnesium ions without reducing the hydrogen carbonate concentration in the sub-flow of liquid passing through the second liquid treatment section 4. The liquid passing through the second liquid treatment section 4 is thus enriched with potassium. Both the carbonate hardness and the permanent hardness of the sub-flow of liquid led through the second liquid treatment section 4 are reduced.

The third liquid treatment section 5 is optional and may include a liquid treatment medium for essentially demineralising water brought into contact with the liquid treatment medium. The liquid treatment medium may be a mix of cation exchange resin and anion exchange resin, for example.

In each of the liquid treatment sections 3-5, the liquid treatment medium may be provided in granular form. The particle size distribution may be essentially the same in each of the liquid treatment sections. Other types of liquid treatment media may be admixed with the ion exchange material in one or more of the liquid treatment sections 3-5,.

The bypass flow of liquid is led through a bypass liquid treatment section 6 in this example. The bypass liquid treatment section 6 may include a liquid treatment medium for the treatment of liquid by sorption. Examples include activated carbon and materials specifically designed to remove one or more species of heavy metal, e.g. lead scavengers. Absent the release of ions by the medium, the treatment in the further liquid treatment section 7 is of a type other than treatment by contacting with an ion exchange material.

In the illustrated example, a further liquid treatment section 7 is provided, in which the three sub-flows led through the first, second and third liquid treatment sections 3-5, are united with each other and with the bypass flow of liquid. In an alternative embodiment, either of the further liquid treatment section 7 and bypass liquid treatment section 6 may be dispensed with. There is in any case at least one mixing location for uniting the three sub-flows and the bypass flow. Mixing may, however, take place in stages.

It is noted that the sub-flow led through the first liquid treatment section 3 will have a carbonate hardness of zero, but be subjected to only a proportional reduction in total hardness. The sub-flow led through the second liquid treatment section 4 will have a carbonate hardness and a permanent hardness of zero after treatment. The acid neutralising capacity (pH = 4.3) will not be zero. Therefore, if only these sub-flows were to be re-united, then the resulting mix would have a non-zero carbonate hardness, because the second liquid treatment section 4 does not remove the hydrogen carbonate and the first liquid treatment section 3 does not remove all the calcium and magnesium ions. Adding demineralised liquid to the mix results in a lower carbonate hardness than would otherwise arise.

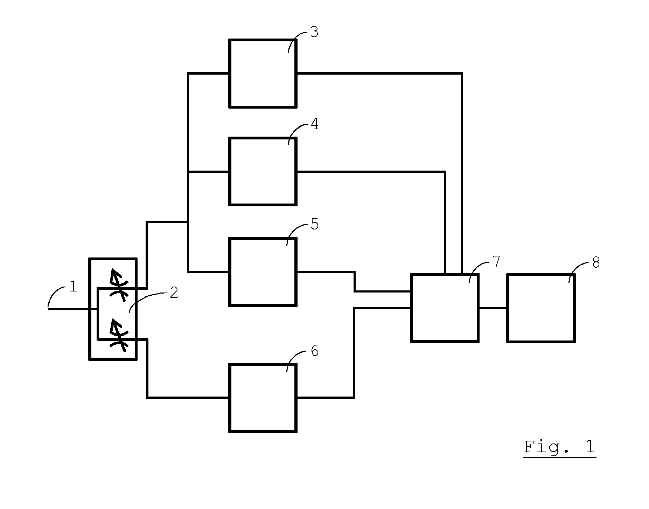

In the illustrated embodiment, the apparatus is connected to an appliance 8 for producing a beverage by extraction, for example a coffee maker. The appliance 8 receives the conditioned liquid. Due to the enrichment with potassium, the resulting beverage is perceived as having a different taste compared with a beverage brewed using liquid of the same composition as that provided at the inlet 1 or using liquid that has passed only through a liquid treatment device of similar constitution as the first liquid treatment section 3. This is explained in more detail below following descriptions of two particular implementations of the basic apparatus as illustrated in Fig. 1.

A first embodiment of an apparatus is assembled from a kit of parts including a replaceable liquid treatment cartridge 9 and a cartridge head 10. The apparatus has essentially the configuration of the apparatus shown in Fig. 1 in terms of the arrangement of liquid treatment sections, except that there is no equivalent of the bypass liquid treatment section 6.

The cartridge head 10 includes an inlet connector 11 for connecting the cartridge head 10 to a supply of liquid to be treated. This may be a connection to the water mains or a tank for storing drinking water to be treated, for example.

The cartridge head 10 and replaceable liquid treatment cartridge 9 are provided with respective components of a mechanical interface for connecting the replaceable liquid treatment cartridge 9 to the cartridge head 10 so as to establish essentially liquid-tight connections between a first outlet port 12 of the cartridge head 10 and a first inlet 13 of the cartridge 9, between a second outlet port 14 of the cartridge head 10 and a second inlet 15 of the replaceable liquid treatment cartridge 9 and between an inlet port 16 of the cartridge head 10 and an outlet 17 of the replaceable liquid treatment cartridge 9. The liquid-tight connections are established by locking the replaceable liquid treatment cartridge 9 in place in a releasable manner. A suitable implementation of the mechanical interface is described in WO 2008/122496 A1, the contents of which are hereby incorporated by reference.

The cartridge head 10 includes a variable-ratio flow divider 18. In use, a flow of liquid to be treated passes from the inlet connector 11 to the variable-ratio flow divider 18 where it is split into a first flow of liquid and a bypass flow of liquid. The ratio between the volumetric flow rates of the first and bypass flows can be adjusted by adjusting the settings of the variable-ratio flow divider 18 using an adjustment mechanism 19, which may be a spindle with an exposed socket for inserting a tool such as an Allen key. Cartridge heads 10 of this type have been in use for some time. A suitable implementation of the variable-ratio flow divider 18 is described in WO 2009/101188 A1, the contents of which are hereby incorporated by reference.

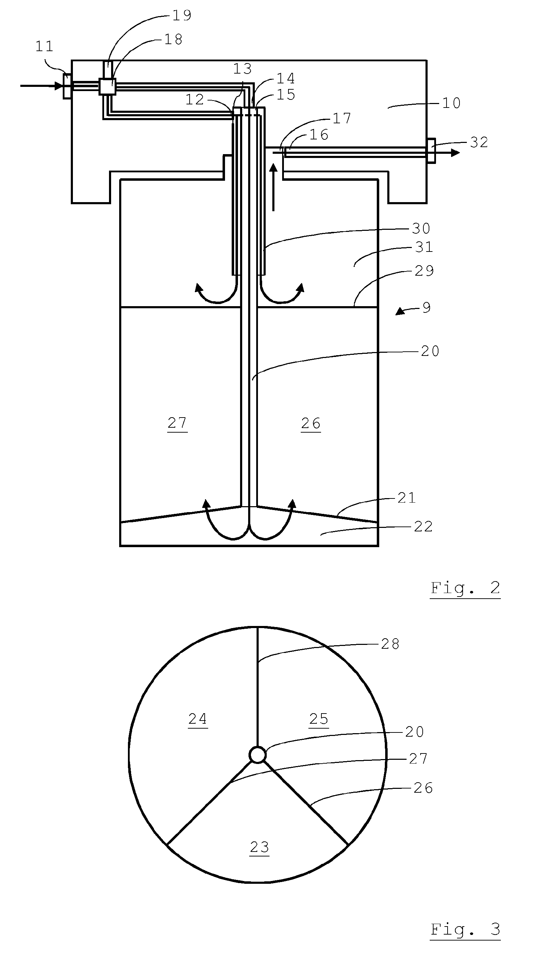

The replaceable liquid treatment cartridge 9 comprises a housing defining a chamber. The housing has a principal, in this example longitudinal, axis (not shown in Fig. 2). The chamber is rotationally symmetric with respect to this principal axis. The first and second inlets 13,15, as well as the outlet 17 are arranged at one longitudinal end of the replaceable liquid treatment cartridge 9, namely the end provided with the cartridge part of the mechanical interface.

In use, the first flow of liquid passes through the first outlet port 12 and the first inlet 13 into a fall tube 20. The fall tube 20 is essentially empty. It is essentially aligned with the principal axis. The fall tube 20 conducts the first flow of liquid to a location in the chamber removed from the end at which the inlets 13,15 and outlet 17 are provided, indeed closer to the opposite longitudinal end. There, an essentially empty chamber section 22 is defined by a liquid-permeable device 21. The liquid-permeable device 21 may be a frame carrying a fleece or other sheet of material suitable for mechanical filtration. It may also be an essentially self-supporting mesh. It functions to keep particles of liquid treatment medium out of the chamber section 22, so that an essentially rotationally invariant pressure distribution is established. Given that the fall tube 20 is essentially aligned with the principal axis of the replaceable liquid treatment cartridge 9 and the chamber has a rotationally symmetric shape, the pressure varies only radially with respect to the principal axis. The combination of the chamber section 22 and the liquid-permeable device 21 thus functions as a flow distribution device.

A section of the chamber adjacent the chamber section 22 and separated from it by the liquid-permeable device 21 is sub-divided into at least two liquid treatment sections 23-25, three in the illustrated example. This is achieved by partitioning walls 26-28 (Fig. 3) extending radially with respect to the principal axis from the fall tube 20 to a radially outer wall of the chamber. The liquid treatment sections sections 23-25 correspond to the liquid treatment sections sections 3-5 of the apparatus described with reference to Fig. 1 as concerns the media provided in them.

Inlet ends of the liquid treatment sections 23-25 are situated where they adjoin the liquid-permeable device 21. A further liquid-permeable device 29 is situated at an opposite end and arranged to retain liquid treatment media provided in the liquid treatment sections sections 23-25. The combination of the empty chamber section 22 and the liquid-permeable device 21 is arranged to split the first flow of liquid into three sub-flows, which are each led through only one respective liquid treatment section 23-25, bypassing the others. Because the liquid treatment sections 23-25 are of essentially the same length and contain liquid treatment media with a similar flow resistance, the cross-sectional areas of the sectors defined by the inlet ends of the liquid treatment sections 23-25 determine the volumetric flow rate ratios between the first, second and third sub-flows. In an alternative embodiment, the liquid treatment cartridge 9 is provided with an adjustable device for setting at least one of the volumetric flow rate ratios between the first, second and third sub-flows.

The bypass flow of liquid passes from the variable-ratio flow divider 18 through the second outlet port 14 and the second inlet 15 into the replaceable liquid treatment cartridge 9, in use. There, an annular conduit section 30 arranged around an upper section of the fall tube 20 leads the bypass flow into a further liquid treatment section 31 defined in the chamber of the replaceable liquid treatment cartridge 9. The bypass flow of liquid thus bypasses the first, second and third liquid treatment sections 23-25. This further liquid treatment section 31 corresponds to the further liquid treatment section 7 discussed above with reference to Fig. 1 as far as the liquid treatment medium contained therein is concerned. The further liquid treatment section 31 forms a mixing location, where the first to third sub-flows and the bypass flow are united and thus mixed. The mix of treated liquid then passes through the outlet 17 and the inlet port 16 to an outlet connector 32 for connection to an appliance such as the appliance 8 mentioned above with reference to Fig. 1.

To facilitate manufacturing of the replaceable liquid treatment cartridge 9, the fall tube 20, annular conduit section 30, partitioning walls 26-28 and liquid-permeable devices 21,29 may be assembled as a unit prior to insertion into a lower half of the cartridge housing, which is then closed by joining the latter with an upper half of the cartridge housing. Alternatively, an insert formed by the liquid-permeable device 21, fall tube 20 and annular conduit section 30 may be inserted first, whereupon the partitioning walls 26-28 are inserted so as to be supported by the already inserted assembly. Then, the liquid treatment sections 23-25 can be filled with liquid treatment media and the further liquid-permeable device inserted.

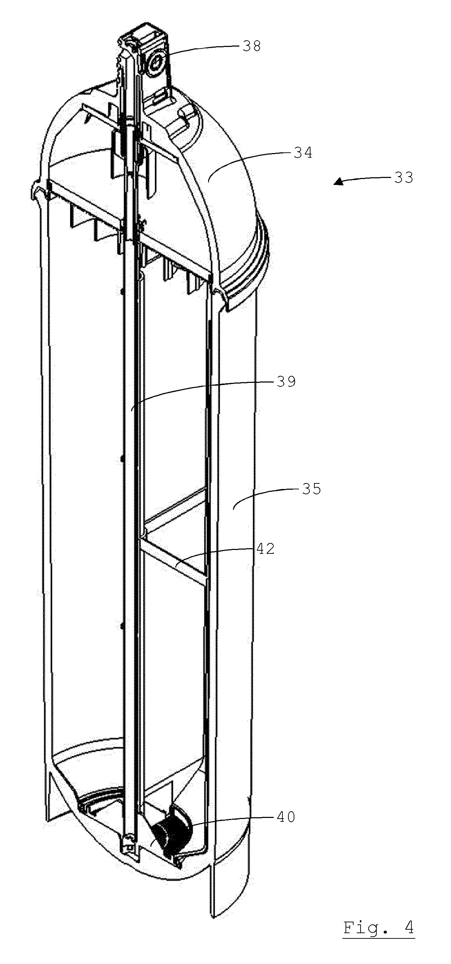

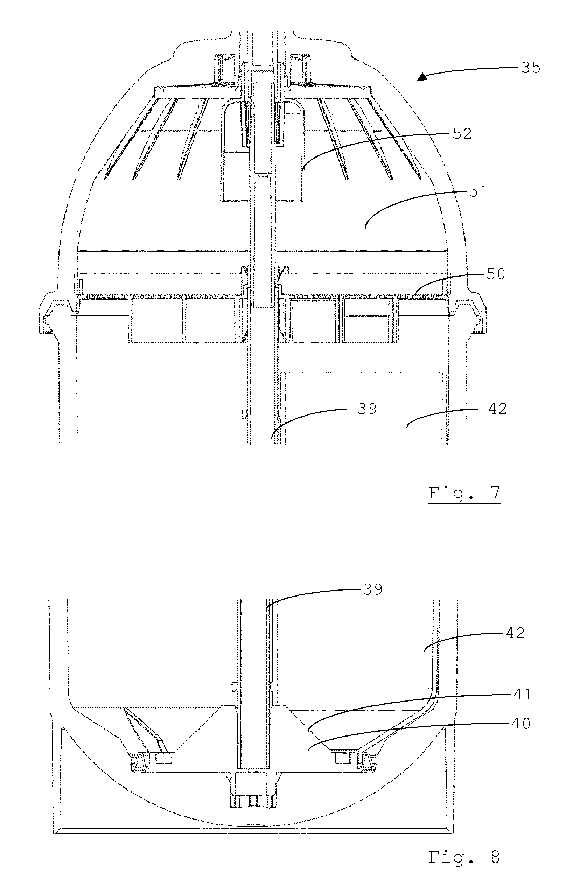

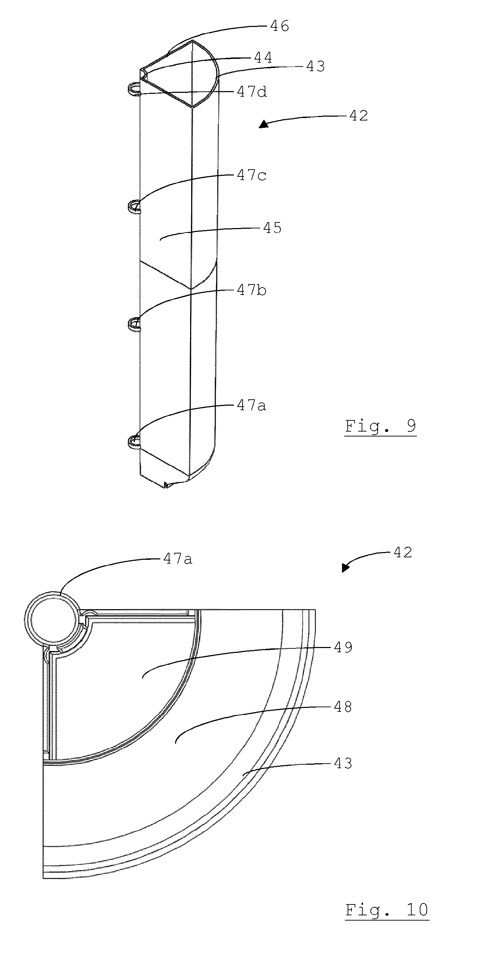

In a variant (Figs. 4-10), a liquid treatment cartridge 33 of essentially the same configuration as the one discussed above with reference to Figs. 2-3 is provided. This variant is even easier to assemble. The corresponding cartridge head is of a similar configuration as the one of Fig. 2, including part of a mechanical interface as disclosed in WO 2008/122496 A1 and variable-ratio flow divider as disclosed in WO 2009/101188 A1. The illustrated cartridge 33 has two instead of three parallel liquid treatment sections, in addition to a further liquid treatment section corresponding to the further liquid treatment section 31 of the replaceable liquid treatment cartridge 9 of Figs. 2-3.

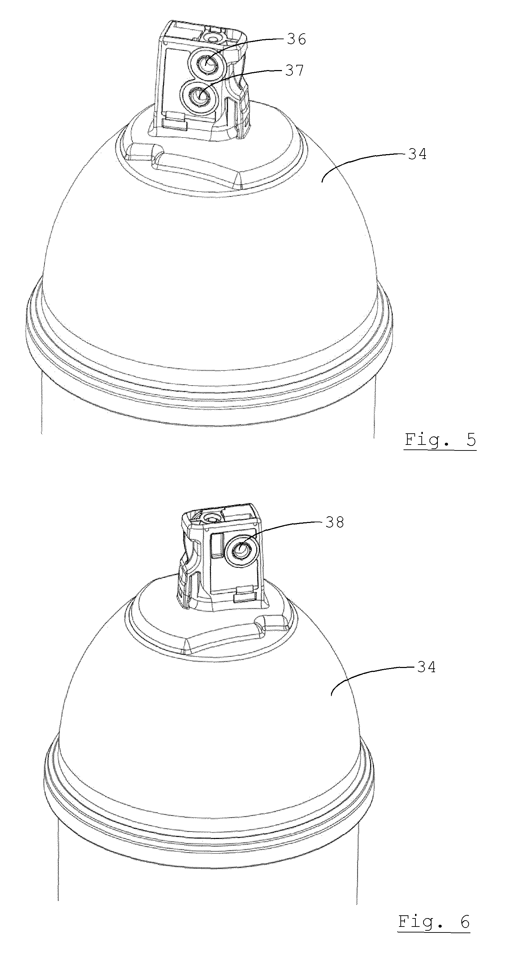

The cartridge 33 has a housing comprised of two parts 34,35 joined together, e.g. welded together, at flanges to define a chamber. A first part 34 is provided with part of the mechanical interface for joining the cartridge 33 to a cartridge head. First and second inlets 36,37 (Fig. 5) and an outlet 38 (Fig. 6) correspond to those of the replaceable liquid treatment cartridge 9 of Figs. 2-3.

In use, the first inlet 36 receives the first flow of liquid, which passes through a fall tube 39 to a chamber section 40 defined at a first longitudinal end of the chamber. This chamber section 40 corresponds to the chamber section 22 of the embodiment of Figs. 2-3. It is partly delimited by a liquid-permeable device 41 to form a flow distribution device.

An insert 42 (Figs. 4,9,10) for forming a liquid treatment section, in particular a second liquid treatment section as described above with reference to Fig. 1, has a radially outer wall 43, radially inner wall 44 and two essentially radially extending walls 45,46. The radially outer wall 43 conforms to a section of the wall of the cartridge housing defining the chamber section in which parallel liquid treatment sections are arranged. The radially inner wall 44 joins the radially extending walls 45,46 at their radially inner ends. Connectors 47a-d are provided to allow the fall tube 39 to support the insert 42. The walls 43-46, together with a curved wall section 48 extending radially inwards from the radially outer wall 43 and joined to the radially extending walls 45,46 define a container open at an inlet end and an outlet end. At the inlet end, the curved wall section 48, the radially extending walls 45,46 and the radially inner wall 44 define an inlet aperture 49, in which an optional liquid-permeable device (not shown) for retaining liquid treatment media may be arranged. In that case, the insert 42 may be filled with a liquid treatment medium prior to insertion into the second part 35 of the housing.

One or more further inserts with the connectors at a slightly different position could be inserted to form further liquid treatment sections. The remainder of the chamber section in which the insert 42 is positioned forms a first liquid treatment section as described above with reference to Fig. 1, when filled with the appropriate liquid treatment medium.

A further liquid-permeable device 50 is provided at an opposite end of the chamber section in which parallel liquid treatment sections are defined. It is arranged to retain the liquid treatment media of these liquid treatment sections. It is situated between them and a further liquid treatment section 51 defined in a section of the chamber in the cartridge housing delimited by the first housing part 34. In use, the bypass flow of liquid passes through an annular conduit section 52 of similar configuration to that of the cartridge 9 of Figs. 2 and 3. There, the sub-flows that have passed through the parallel liquid treatment sections are united with the bypass flow of liquid and subjected to treatment by the liquid treatment medium contained in the further liquid treatment section 51.

The media in the further liquid treatment section 51, the second liquid treatment section defined by the insert 42 and the first liquid treatment section defined by the remainder of the chamber section in which the insert 42 is situated are as described above with reference to Fig. 1.

To test the effect of the proposed enrichment with potassium, a prototype of the replaceable liquid treatment cartridge 33 as shown in Figs. 4-10 was made. To obtain water with lower potassium concentrations, the conditioned water was mixed to various degrees with water conditioned by means of a conventional cartridge of exactly the same construction but without the insert 42 and filled with weakly acidic cation exchange resin in the hydrogen form. To obtain water with higher potassium concentrations, the conditioned water was mixed to various degrees with water conditioned by means of a conventional cartridge of exactly the same construction but without the insert 42 and filled with weakly acidic cation exchange resin in the potassium form. The effect obtained by this type of mixing corresponds to that obtainable using a configuration as displayed in Fig. 1.

In the prototype cartridge, the insert 42 formed a compartment occupying 25 % of the available volume in the longitudinal section in which it was situated. The remainder of that section thus formed a first liquid treatment section occupying 75 % of the volume. The further liquid treatment section 51 was filled only with activated carbon.

The compartment in the insert 42 was filled with weakly acidic macroporous cation exchange resin based on polyacrylate (in the example Lewatit CNP P resin, available from Lanxess) and loaded with potassium. It thus constituted a second liquid treatment section in the nomenclature used herein. A small amount of activated carbon was admixed. No other ion exchange resin was present.

The remaining (first) liquid treatment section was filled with the same resin but completely in the hydrogen form.

The water conditioned using this prototype cartridge was obtained with a bypass setting of 20 %, meaning that 20 % by volume of the conditioned water passed only through the further liquid treatment section 51.

The water with which the conditioned water obtained with the prototype cartridge was mixed was obtained using a conventional cartridge and a specially prepared cartridge, each having only one liquid treatment section followed by a further liquid treatment section (i.e. the cartridge 33 as shown in Fig. 4 without the insert 42).

The conventional cartridge was used to obtain the water with a low potassium concentration. In this cartridge, the majority by (dry) volume of the liquid treatment medium in the single liquid treatment section containing ion exchange resin was formed by the same weakly acidic cation exchange resin in the hydrogen form. A minority by volume comprised silver-loaded weakly acidic cation exchange resin. A further minority comprised activated carbon. Some of the weakly acidic cation exchange resin in the hydrogen form was in dried form. The weakly acidic cation exchange resin in the potassium form formed less than 10 % of the total by volume, as did the activated carbon. The further liquid treatment section 51 contained only activated carbon. The water conditioned using this conventional cartridge was obtained with a bypass setting of 40 %, meaning that 40 % of the treated water by volume passed only through the further liquid treatment section 51.

In the specially prepared cartridge used to obtain the water with a very high potassium concentration, the majority by volume of the liquid treatment medium in the single liquid treatment section containing ion exchange resin was formed by the same weakly acidic cation exchange resin in the potassium form. A minority by volume comprised activated carbon. The activated carbon formed about 5 % of the total medium by volume. The further liquid treatment section 51 contained only activated carbon. The water conditioned using this specially prepared cartridge was obtained with a bypass setting of 0 %, meaning that all of the treated water passed through the cation exchange resin in the potassium form before passing through the activated carbon in the further liquid treatment section 51.

Table 1 shows the compositions of the untreated water (water sample 1); of two samples of water (water samples 2 and 3) conditioned with the conventional cartridge containing the weakly acidic cation exchange resin in the hydrogen form (at the bypass settings mentioned); and of two samples (water samples 4 and 5) of water conditioned with the prototype cartridge in the manner described above. The water obtained by treatment with the cartridge containing only cation exchange resin in the potassium form was not analysed separately, as it was not used unblended.

**TABLE 1 - Composition of conditioned water samples**

| Parameter | Unit | Water sample 1 | Water sample 2 | Water sample 3 | Water sample 4 | Water sample 5 |
|---|---|---|---|---|---|---|
| Conductivity | µS·cm⁻¹ | 867.0 | 708.0 | 702.0 | 738.0 | 759.0 |
| pH | | 8.1 | 6.9 | 7.1 | 6.8 | 7.0 |
| Carbonate hardness | °dH | 12.3 | 6.4 | 6.0 | 4.9 | 5.2 |
| Total hardness | °dH | 20.3 | 14.8 | 14.1 | 7.4 | 6.2 |
| Permanent hardness | °dH | 8.0 | 8.4 | 8.1 | 2.6 | 1.0 |
| [Cl⁻] | mg·l⁻¹ | 71.4 | 69.6 | 69.7 | 70.2 | 71.4 |
| [NO₂⁻] | mg·l⁻¹ | 0 | 0 | 0 | 0 | 0.0 |
| [NO₃⁻] | mg·l⁻¹ | 2.1 | 1.9 | 2.0 | 1.8 | 1.7 |
| [PO₄³⁻] | mg·l⁻¹ | 1.0 | 1.1 | 1.0 | 1.0 | 1.0 |
| [SO₄²⁻] | mg·l⁻¹ | 139.8 | 137.0 | 137.2 | 137.8 | 138.8 |
| [HCO₃⁻] | mg·l⁻¹ | 267.1 | 138.8 | 130.5 | 105.7 | 112.4 |
| [Na⁺] | mg·l⁻¹ | 36.9 | 36.8 | 37.0 | 29.1 | 30.2 |
| [NH₄⁺] | mg·l⁻¹ | 0 | 0 | 0 | 0 | 0.0 |
| [K⁺] | mg·l⁻¹ | 2.5 | 2.5 | 2.6 | 97.7 | 111.1 |
| [Ca²⁺] | mg·l⁻¹ | 107.6 | 70.6 | 66.6 | 30.4 | 25.8 |
| [Mg²⁺] | mg·l⁻¹ | 23.0 | 21.7 | 20.8 | 13.6 | 11.2 |

It will be apparent that the prototype cartridge was relatively effective in enriching the water with potassium and reducing the permanent hardness. In other respects, its performance was similar to that of the conventional cartridge.

To determine the effect of the enrichment with potassium on the taste of coffee brewed with water having a relatively high potassium concentration, a test was conducted over two days. Samples having the composition set out in Table 2 were prepared for use on the first day. Samples having the composition set out in Table 3 were prepared for use on the second day.

**TABLE 2 - Composition of samples of drinking water used to prepare coffee tasted on first day of testing**

| Parameter | Unit | Sample 1-1 | Sample 1-2 | Sample 1-3 | Sample 1-4 |
|---|---|---|---|---|---|
| Conductivity | µS·cm⁻¹ | 729.0 | 759.0 | 702.0 | 717.0 |
| pH | | 7.1 | 7.0 | 7.1 | 7.2 |
| Acid neutralising capacity (DIN 38409-7) pH 4.3 | mmol·l⁻¹ | 2.0 | 1.9 | 2.1 | 2.1 |
| Carbonate hardness | °dH | 5.5 | 5.2 | 6.0 | 5.8 |
| Permanent hardness | °dH | 4.7 | 1.0 | 8.1 | 6.3 |
| Total hardness | °dH | 10.2 | 6.2 | 14.1 | 12.1 |
| [Cl⁻] | mg·l⁻¹ | 69.9 | 71.4 | 69.7 | 70.1 |
| [NO₂⁻] | mg·l⁻¹ | 0 | 0.0 | 0 | 0 |
| [NO₃⁻] | mg·l⁻¹ | 2.0 | 1.7 | 2.0 | 2.0 |
| [PO₄³⁻] | mg·l⁻¹ | 1.0 | 1.0 | 1.0 | 1.0 |
| [SO₄²⁻] | mg·l⁻¹ | 137.3 | 138.8 | 137.2 | 137.4 |
| [HCO₃⁻] | mg·l⁻¹ | 120.0 | 112.4 | 130.5 | 125.5 |
| [Na⁺] | mg·l⁻¹ | 33.8 | 30.2 | 37.0 | 35.7 |
| [NH₄⁺] | mg·l⁻¹ | 0 | 0.0 | 0 | 0 |
| [K⁺] | mg·l⁻¹ | 56.6 | 111.1 | 2.6 | 30.9 |
| [Ca²⁺] | mg·l⁻¹ | 46.5 | 25.8 | 66.6 | 56.0 |
| [Mg²⁺] | mg·l⁻¹ | 16.0 | 11.2 | 20.8 | 18.4 |

**TABLE 3 - Composition of samples of drinking water used to prepare coffee tasted on second day of testing**

| Parameter | Unit | Sample 2-1 | Sample 2-2 | Sample 2-3 | Sample 2-4 |
|---|---|---|---|---|---|
| Conductivity | µS·cm⁻¹ | 708.0 | 738.0 | 993.0 | 1101.0 |
| pH | | 6.9 | 6.8 | 7.6 | 8.0 |
| Acid neutralising capacity (DIN 38409-7) pH 4.3 | mmol l⁻¹ | 2.3 | 1.8 | 3.6 | 4.4 |
| Carbonate hardness | °dH | 6.4 | 4.9 | 4.0 | 2.5 |
| Total hardness | °dH | 14.8 | 7.4 | 4.0 | 2.5 |
| Permanent hardness | °dH | 8.4 | 2.6 | 0 | 0 |
| [Cl⁻] | mg·l⁻¹ | 69.6 | 70.2 | 71.34 | 71.2 |
| [NO₂⁻] | mg·l⁻¹ | 0.0 | 0.0 | 0.0 | 0.0 |
| [NO₃⁻] | mg·l⁻¹ | 1.9 | 1.8 | 1.8 | 1.8 |
| [PO₄³⁻] | mg·l⁻¹ | 1.1 | 1.0 | 1.0 | 1.0 |
| [SO₄²⁻] | mg·l⁻¹ | 137.0 | 137.8 | 139.8 | 138.7 |
| [HCO₃⁻] | mg·l⁻¹ | 138.8 | 105.7 | 217.2 | 264.9 |
| [Na⁺] | mg·l⁻¹ | 36.8 | 29.1 | 15.8 | 9.6 |
| [NH₄⁺] | mg·l⁻¹ | 0 | 0 | 0.0 | 0.0 |
| [K⁺] | mg·l⁻¹ | 2.5 | 97.7 | 236.1 | 301.6 |
| [Ca²⁺] | mg·l⁻¹ | 70.6 | 30.4 | 16.9 | 10.5 |
| [Mg²⁺] | mg·l⁻¹ | 21.7 | 13.6 | 7.2 | 4.5 |

Carbonate hardness corresponds to the concentration of alkaline calcium and magnesium minerals, converted to the equivalent concentration of CaCO₃ as expressed in °dH.

Sample 1-1 was a mix of equal parts of water obtained using the conventional cartridge and water obtained using the prototype cartridge (corresponding to water samples 3 and 5 in Table 1). Sample 1-2 consisted only of water obtained using the prototype cartridge (corresponding to water sample 5 in Table 1). Sample 1-3 consisted only of water obtained using the conventional cartridge (water sample 3 in Table 1). Sample 1-4 consisted of a mix of one part water obtained using the prototype cartridge and three parts water obtained using the conventional cartridge (water samples 3 and 5 in Table 1).

Sample 2-1 consisted only of water obtained using the conventional cartridge (water sample 2 in Table 1). Sample 2-2 consisted only of water obtained using the prototype cartridge (water sample 4 in Table 1). Sample 2-3 was a mix of equal volumes of water obtained using the prototype cartridge and water obtained using the specially prepared cartridge having only cation exchange resin in the potassium form. Sample 2-4 was a mix of one part water obtained using the prototype cartridge and three parts water obtained using the specially prepared cartridge having only cation exchange resin in the potassium form.

The samples were used to brew coffee with a Karlsbader coffee maker. Each coffee sample was obtained using 40.1 g ground coffee and 610 g of water, boiled and then cooled to 95 °C. The coffee was poured into cups warmed to 60 °C and left to stand for three minutes before being sampled by the test persons. The resulting temperature of the coffee was between 49.8 °C and 56.1 °C.

On each day, seven test persons schooled in tasting coffee were asked to describe the coffee samples in terms of taste, aftertaste and mouth sensation. This was a simple descriptive test in accordance with German standard DIN 10964. Subsequently, the group gave a consensual comparative description. The individual descriptions were compiled into a group description.

Subsequently, the coffee samples were ranked in terms of balance and roasted aroma in accordance with German standard DIN 10963. The panel of test persons understood this term to comprise attributes such as earthy, smoky, roasted, burning. The term is used to define the strong aroma components of the coffee.

The results of the tests are set out in Tables 4-8. In Tables 4-7, the ranking sum is obtained by summing the positions of the samples concerned over the rankings provided by the seven test persons.

**TABLE 4 - Ranking in terms of balance of samples tasted on the first day**

| Rank (highest first) | Ranking sum | Sample | [K⁺] |
|---|---|---|---|
| 1 | 7 | 1-1 | 56.6 mg·l⁻¹ |
| 2 | 15 | 1-2 | 111.1 mg·l⁻¹ |
| 3 | 23 | 1-3 | 2.6 mg·l⁻¹ |
| 4 | 25 | 1-4 | 30.9 mg·l⁻¹ |

**TABLE 5 - Ranking in terms of roasted aroma of samples tast-ed on the first day**

| Rank (highest first) | Ranking sum | Sample | [K⁺] |
|---|---|---|---|
| 1 | 11 | 1-2 | 111.1 mg·l⁻¹ |
| 2 | 18 | 1-3 | 2.6 mg·l⁻¹ |
| 2 | 18 | 1-4 | 30.9 mg·l⁻¹ |
| 3 | 23 | 1-1 | 56.6 mg·l⁻¹ |

**TABLE 6 - Ranking in terms of balance of samples tasted on the second day**

| Rank (highest first) | Ranking sum | Sample | [K⁺] |
|---|---|---|---|
| 1 | 13 | 2-1 | 2.5 mg·l⁻¹ |
| 2 | 14 | 2-2 | 97.7 mg·l⁻¹ |
| 3 | 21 | 2-3 | 236.1 mg·l⁻¹ |
| 4 | 22 | 2-4 | 301.6 mg·l⁻¹ |

**TABLE 7 - Ranking in terms of roasted aroma of samples tast-ed on the second day**

| Rank (highest first) | Ranking sum | Sample | [K⁺] |
|---|---|---|---|
| 1 | 11 | 2-4 | 301.6 mg·l⁻¹ |
| 2 | 17 | 2-3 | 236.1 mg·l⁻¹ |
| 2 | 17 | 2-2 | 97.7 mg·l⁻¹ |
| 3 | 25 | 2-1 | 2.5 mg·l⁻¹ |

**TABLE 8 - Summary of consensual descriptive test results for all samples**

| Sample | [K⁺] | Description | Mouth feel | Aftertaste |
|---|---|---|---|---|
| 2-1 | 2.5 mg·l⁻¹ | This sample was predominantly found to be balanced. It was also characterised as the mildest of the samples of the second day. The panellists detected an intensive roasted aroma. The coffee was slightly to clearly bitter and slightly acid. The majority tasted an unobtrusive sweetness at the end of tasting. | Slightly oily and covering the mouth. Slightly dry. | Clear and long lasting aroma of roasted coffee and bitterness. Only a slight and less intensive acid note was detectable. |
| 1-3 | 2.6 mg·l⁻¹ | Unbalanced, in particular in comparison to samples 1-1 and 1-2. The acid note was clearer than for those other samples, the roasted aroma stronger, but occurring relatively late. A slight bitterness was detected by most panellists and a slight sweetness towards the end of the tasting period by some. | Sliding out of the mouth/ slightly oily and covering the mouth. | Fading acidity and fading bitter note. Lasting strong aroma of roasted coffee. Some panellists continued to detect a slightly sweet taste. |
| 1-4 | 30.9 mg·l⁻¹ | The majority of the panellists found this sample unbalanced, a few slightly balanced. The panellists detected a clear aroma of roasted coffee. The bitter notes were relatively intense and the acid tones less intensive compared to samples 1-3 and 1-2. | Oily and covering the mouth. Some panellists characterised the coffee as dry or giving a burning or scratching sensation. | Long lasting aroma of roasted coffee and slight but fading acid taste. |
| 1-1 | 56.6 mg·l⁻¹ | This sample was described as the most balanced of all four samples tested on the first day by all panellists. It was also described as the mildest. A clear aroma of roasted coffee and a slight bitter note were present. The majority of the panellists detected a slightly acid note and a slight sweetness from the beginning. | Sliding out of the mouth and giving a slightly dry sensation. | Clear aroma of roasted coffee, slightly fading bitterness and with a slightly acid note in the background. |
| 2-2 | 97.7 mg·l⁻¹ | The majority of the panellists found this sample to be less balanced than sample 2-1. It had the clearest aroma of roasted coffee of all four samples tested on the second day and was described overall as strong. The aroma of roasted coffee was described by some as giving a slight burning and earthy sensation. The majority of the panellists found the bitterness to be more intensive than for sample 2-1. A slight to clear acidity was detectable and for some a slight sweetness towards the end of the tasting period. | Sliding out of the mouth. Some panellists also found the coffee dry and astringent. | Clear and lasting aroma of roasted coffee. Constant bitterness and slightly fading acid note. |
| 1-2 | 111.1m g·l⁻¹ | This sample was described as balanced by all panellists, but less balanced than sample 1-1. It differed from sample 1-1 in hav-ing a clearer roasted aroma, a slightly more pronounced slight to clear acidity and a slightly less pronounced bitterness. Some panellists perceived a slight but less strong sweetness than sample 1-1. | Sliding out of the mouth and giving a slightly dry sensation. | Lasting aroma of roasted coffee and lasting bitterness. Fading acid note. |
| 2-3 | 236.1 mg·l⁻¹ | Most panellists found this sample to be balanced. They all described it as having a clear roasted aroma and as being clearly bitter, the bitter taste tending to increase. A slight acidity was present, which the majority considered to increase. The sample was also rather sweet. | Very smooth and full. | Clear coffee note and bitterness. Fading acid note and hardly any sweetness. |
| 2-4 | 301.6 mg·l⁻¹ | The panellists described this sample as less balanced than sample 2-3. This sample was the strongest and reminiscent of espresso. The coffee had a strong roasted aroma, which the majority described as smoky or burning. It was clearly bitter and slightly to clearly acid. | Oily and covering the mouth. Dry and astringent. | Slightly fading aroma of roasted coffee and for the most part fading acidity. Some panellists detected a faint sweetness. |

The results show that the roasted aroma is perceived as about the same for potassium concentrations of 2.5 and 30 mg·l⁻¹. A minimum concentration of 30 mg·l⁻¹ is required to achieve an effect. The roasted aroma becomes milder at concentrations of between 30 mg·l⁻¹ and 60 mg·l⁻¹, but then becomes stronger than when water obtained by means of a conventional cartridge is used to brew the coffee. It then becomes ever more intensive with rising potassium concentration. At a concentration of 300 mg·l⁻¹, the coffee starts to cause a burning sensation.

The results show that it is possible to adjust the taste of coffee to conform to regional preferences (a strong roasted aroma is preferred in some countries but not in others) by varying the mineral composition, for which the liquid treatment devices described herein are very suitable.

The invention is not limited to the embodiments described above, which may be varied within the scope of the accompanying claims.

For example, the apparatus shown schematically in Fig. 1 can also be implemented using separate cartridges for each liquid treatment section and an appropriate manifold or multi-cartridge filter head. Moreover, it is possible to use a (second) variable-ratio flow divider to set the volumetric flow rate ratio between the flow of liquid led through the first liquid treatment section and the flow of liquid led through the second liquid treatment section. Such a variable-ratio flow divider may be integrated in a replaceable liquid treatment cartridge. In that case, the ratio may be set in the factory or the cartridge may be provided with an adjustment mechanism allowing a user to adjust the ratio set by the variable-ratio flow divider.

Enrichment with potassium may alternatively or additionally be achieved by dissolving one or more potassium salts, as opposed to relying purely on a cation exchange material in the potassium form. Such additional enrichment may be effected in the further liquid treatment sections 7,31,51, for example.

**LIST OF REFERENCE NUMERALS**

| | | |
|---|---|---|
| 1 | - | Inlet |
| 2 | - | Variable-ratio flow divider |
| 3 | - | 1^{st} liquid treatment section |
| 4 | - | 2^{nd} liquid treatment section |
| 5 | - | 3^{rd} liquid treatment section |
| 6 | - | Bypass liquid treatment section |
| 7 | - | Downstream liquid treatment section |
| 8 | - | Appliance |
| 9 | - | Liquid treatment cartridge |
| 10 | - | Cartridge head |
| 11 | - | Inlet connector |
| 12 | - | First outlet port |
| 13 | - | First inlet |
| 14 | - | Second outlet port |
| 15 | - | Second inlet |
| 16 | - | Inlet port |
| 17 | - | Outlet |
| 18 | - | Variable-ratio flow divider |
| 19 | - | Adjustment mechanism |
| 20 | - | Fall tube |
| 21 | - | Liquid-permeable device |
| 22 | - | Chamber section |
| 23 | - | First liquid treatment section |
| 24 | - | Second liquid treatment section |
| 25 | - | Third liquid treatment section |
| 26 | - | Partitioning wall |
| 27 | - | Partitioning wall |
| 28 | - | Partitioning wall |
| 29 | - | Further liquid-permeable device |
| 30 | - | Annular conduit section |
| 31 | - | Further liquid treatment section |
| 32 | - | Outlet connector |
| 33 | - | Liquid treatment cartridge |
| 34 | - | First housing part |
| 35 | - | Second housing part |
| 36 | - | First inlet |
| 37 | - | Second inlet |
| 38 | - | Outlet |
| 39 | - | Fall tube |
| 40 | - | Chamber section |
| 41 | - | Liquid-permeable device |
| 42 | - | Insert |
| 43 | - | Radially outer wall |
| 44 | - | Radially inner wall |
| 45 | - | First radially extending wall |
| 46 | - | Second radially extending wall |
| 47a-d | - | Connectors |
| 48 | - | Curved wall section |
| 49 | - | Inlet aperture |
| 50 | - | Further liquid-permeable device |
| 51 | - | Further liquid treatment section |
| 52 | - | Annular conduit section |

## Claims

1. Apparatus for conditioning an aqueous liquid, e.g. drinking water,
wherein the apparatus includes a first liquid treatment section (3;23) including a liquid treatment medium for reducing at least the carbonate hardness of water brought into contact with the medium, and
wherein the apparatus includes a second liquid treatment section (4;24), separate from the first liquid treatment section (3;23) and including a liquid treatment medium for releasing potassium into water brought into contact with the medium, **characterised in that**
the apparatus is configured to provide the treated water with a potassium concentration of at least 30 mg·l⁻¹.

2. Apparatus according to claim 1,
wherein the apparatus is configured to provide the treated water with a potassium concentration of at most 300 mg·l⁻¹.

3. Apparatus according to claim 1 or 2,
wherein the liquid treatment medium for releasing potassium into water includes a cation exchange material loaded with potassium.

4. Apparatus according to any one of the preceding claims,
wherein the liquid treatment medium for reducing at least the carbonate hardness includes a cation exchange material loaded with hydrogen.

5. Apparatus according to any one of the preceding claims,
wherein the apparatus is a throughflow apparatus, having at least one inlet (1;11) for connection to a source of untreated liquid and at least one outlet (32) for supplying the conditioned liquid, and
wherein at least the first and second liquid treatment sections (3,4;23,24) are configured to treat liquid flowing through the liquid treatment medium whilst retaining the liquid treatment medium.

6. Apparatus according to claim 5,
wherein the apparatus is arranged to split an incoming flow of liquid into at least two sub-flows,
to lead a first of the sub-flows through only one of the first and second liquid treatment sections (3,4;23,24),
to lead a second of the sub-flows through at least the other of the first and second liquid treatment sections (3,4;23,24), and
to reunite the first and second sub-flows upstream of the at least one outlet (32).

7. Apparatus according to claim 6,
wherein the apparatus is arranged to split the incoming flow of liquid into at least three sub-flows,
to lead a third of the sub-flows through a third liquid treatment section (5;25), and
to reunite the first, second and third sub-flows upstream of the at least one outlet (32).

8. Apparatus according to any one of the preceding claims,
wherein the apparatus includes a housing (34,35), the housing (34,35) being provided with at least one inlet port (13,15;36,37) and at least one outlet port (17;38), and
wherein at least the first and second liquid treatment sections (3,4;23,24) are contained within the housing (34,35).

9. Apparatus according to claim 8,
wherein at least the first and second liquid treatment sections (3,4;23,24) are contained within a replaceable liquid treatment cartridge (9;33) for releasable connection to a cartridge head (10) including the at least one inlet (11) and the at least one outlet (32).

10. Apparatus according to any one of the preceding claims,
wherein the apparatus is arranged to split an incoming flow of liquid into at least two sub-flows,
to lead a first of the sub-flows through only one of the first and second liquid treatment sections (3,4;23,24),
to lead a second of the sub-flows through at least the other of the first and second liquid treatment sections (3,4;23,24), and
to reunite the first and second sub-flows upstream of the at least one outlet (32), and
wherein the apparatus is configured to split the incoming flow of liquid such as to create at least a further sub-flow bypassing each of the first, second and third liquid treatment sections (3,4;23,24).

11. Apparatus according to claim 10,
including a further liquid treatment section (6,7;31;51) through which the bypass sub-flow is led,
wherein the treatment in the further liquid treatment section (6,7;31;51) is of a type other than treatment by contacting with an ion exchange material.

12. Liquid treatment cartridge for use in an apparatus according to any one of the preceding claims and including at least the first and second liquid treatment sections (3,4;23,24).

13. Method of conditioning an aqueous liquid, e.g. drinking water,
wherein at least a portion of the liquid is led through a first liquid treatment section (3;23) including a liquid treatment medium for reducing at least the carbonate hardness of the liquid, and
wherein at least a portion of the liquid is led through a second liquid treatment section (4;24), separate from the first liquid treatment section (3;23) and including a liquid treatment medium for releasing potassium into the liquid, **characterised by**
providing the conditioned liquid with a potassium concentration of at least 30 mg·l⁻¹.

14. Method according to claim 13,
including the use of an apparatus according to any one of claims 1-11.

15. Use of drinking water having a potassium concentration of at least 30 mg·l⁻¹ and/or obtained by means of a method according to any one of claims 13-14 to produce a beverage by extraction, for example coffee.
